Europäisches Patentamt

European Patent Office

Office européen des brevets

(11) Numéro de publication : **0 286 502 B1**

# FASCICULE DE BREVET EUROPEEN

(45) Date de publication du fascicule du brevet :
26.02.92 Bulletin 92/09

(51) Int. Cl.⁵ : **B05C 19/00,** B05C 9/06, B05D 1/36

(21) Numéro de dépôt : 88400718.8

(22) Date de dépôt : 24.03.88

(54) **Procédé et installation de revêtement d'objets par poudrage.**

(30) Priorité : 08.04.87 FR 8704956

(43) Date de publication de la demande :
12.10.88 Bulletin 88/41

(45) Mention de la délivrance du brevet :
26.02.92 Bulletin 92/09

(84) Etats contractants désignés :
BE CH DE ES GB IT LI NL SE

(56) Documents cités :
FR-A- 2 086 912
US-A- 4 044 175

(73) Titulaire : **SAMES S.A.**
**Z.I.R.S.T. Chemin de Malacher**
**F-38240 Meylan (FR)**

(72) Inventeur : **Fabre, Pierre**
**4 Boulevard Maréchal Leclerc**
**F-38000 Grenoble (FR)**

(74) Mandataire : **CABINET BONNET-THIRION**
**95 Boulevard Beaumarchais**
**F-75003 Paris (FR)**

## Description

L'invention se rapporte à un procédé de revêtement d'objets par poudrage, principalement pour recouvrir de tels objets d'une peinture en poudre thermodurcissable avant de les acheminer vers un poste de chauffage où les particules de poudre commencent par fondre sous l'effet de la chaleur pour former ensuite, par polymérisation, une couche d'un revêtement homogène et résistant.

L'invention concerne plus particulièrement un perfectionnement permettant à la fois d'augmenter le rendement de dépôt global et de réduire considérablement les pertes de temps occasionnées par les changements de couleur. L'invention vise aussi une installation de poudrage d'objets susceptible notamment de mettre en oeuvre le procédé.

Dans une installation de poudrage de peinture thermodurcissable, l'un des principaux problèmes est celui des changements de couleur et des pertes de temps qu'ils occasionnent. Une installation classique peut comporter plusieurs réservoirs de poudre sélectivement connectables à l'ensemble des projecteurs de poudre situés dans une cabine à l'intérieur de laquelle on fait passer les objets à recouvrir. La poudre non déposée sur les objets est récupérée, notamment par des moyens d'aspiration maintenant une légère dépression dans la cabine. Tant que les objets à peindre sont de la même couleur, il est possible de recycler cette poudre. En revanche, tout changement de couleur implique un cycle de nettoyage assez long. Or, dans certains domaines, comme par exemple l'industrie automobile, il n'est pas envisageable de regrouper les carrosseries à peindre en fonction d'une couleur, sur une chaîne de fabrication. Il est plus fréquent, au contraire, que deux carrosseries qui se succèdent sur un convoyeur d'une chaîne de fabrication, soient destinées à être recouvertes par des peintures de couleurs différentes. Cet inconvénient a longtemps réduit le champ d'application des peintures thermodurcissables appliquées par poudrage.

Le brevet américain N° 4 044 175 a décrit une installation comportant deux cabines de poudrage, respectivement une première cabine pour appliquer une sous-couche et une seconde cabine dotée d'un système de changement de couleur, pour appliquer une couche principale, d'une couleur choisie sur chaque objet à peindre. La poudre non déposée sur les objets dans ladite seconde cabine est récupérée pour alimenter les projecteurs de la première cabine, c'est-à-dire pour former la sous-couche. Un four est intercalé entre les deux cabines. Ce four est destiné à opérer la fusion de la sous-couche, avant application de la couche principale

L'invention vise à simplifier une telle installation tout en améliorant sa productivité, notamment en faisant en sorte que toute la poudre soit utilisée. L'idée de base de l'invention consiste à appliquer la sous-couche sur des objets déjà préchauffés, ce qui réduit le temps de fusion et de prédurcissement de cette sous-couche et augmente le rendement d'application.

Plus précisément, l'invention concerne donc un procédé de revêtement d'objets par poudrage, du type consistant à faire circuler lesdits objets successivement dans une première zone où ils reçoivent, par projection, une sous-couche de poudre puis, après un début de durcissement de ladite sous-couche, dans une seconde zone où chaque objet reçoit, par projection, une couche de poudre d'une couleur choisie susceptible d'être changée d'un objet à l'autre, de la poudre non déposée sur lesdits objets étant récupérée dans ladite seconde zone pour alimenter des moyens de projection situés dans ladite première zone, caractérisé en ce qu'il consiste à élever la température desdits objets avant leur introduction dans ladite première zone.

Dans la pratique, les objets seront par exemple portés à une température supérieure à 50°C et de préférence comprise entre 70 et 120°C. Le fait que l'objet qui reçoit la sous-couche soit préchauffé, a deux conséquences importantes:

– Le préchauffage accélère la fusion et le début de durcissement de la sous-couche. En effet, une peinture en poudre se compose principalement de pigments, d'adjuvants, d'une résine et d'un durcisseur. Pour que ces deux derniers constituants puissent réagir, il faut qu'ils soient au contact, dans une forme liquide, autrement dit, il faut que la "viscosité" du dépôt de poudre diminue. C'est traditionnellement ce qui se produit dans un premier temps, lorsqu'on fait passer l'objet recouvert de poudre dans un four. En augmentant la température de l'objet, on fait fondre les particules de poudre (réduction de viscosité) et on provoque le mélange des constituants, en particulier la résine et le durcisseur. Après quoi, la chaleur contribue au durcissement du revêtement. Par conséquent, les objets doivent normalement séjourner un certain temps dans le four pour que, leur température s'élevant progressivement, le dépôt puisse se transformer en une couche fluide, ceci avant que la phase de durcissement puisse commencer. On a constaté que, lorsque la poudre était appliquée sur une pièce préchauffée, la fusion de celle-ci était beaucoup plus rapide, la réaction entre la résine et le durcisseur commençant donc beaucoup plus tôt.

– Une autre conséquence importante est une augmentation sensible du rendement de dépôt, qui avoisine 100%. On attribue cet excellent résultat au fait que, sur un objet préchauffé, la fluidification presque immédiate du dépôt facilite l'écoulement des charges électriques et élimine donc "l'effet de couche limite". Dans la cabine d'application de la sous-couche, on peut ainsi faire l'économie d'un système de recyclage de poudre. De plus, s'agissant d'une sous-couche de faible épaisseur, par rapport à l'épaisseur totale du revêtement, le poudrage sur surface chaude ne provoque pas de différences d'épaisseur notables, à la surface de l'objet.

En outre, il est à noter que le préchauffage des objets peut se faire sans augmenter le coût de l'installation de poudrage. En effet, l'application de poudre est très généralement précédée d'un certain nombre d'opérations de traitement des objets à peindre, comme par exemple une opération de dégraissage et éventuellement une phosphatation. Ces opérations sont suivies d'un rinçage et d'un séchage à chaud, par exemple par soufflage d'air chaud et/ou par rayonnement infrarouge. A la sortie du poste de séchage, les objets sont habituellement à une température de l'ordre de 75 à 80°C, ce qui correspond à la plage de température requise pour l'application de la sous-couche, conformément au principe de l'invention. Il suffit donc d'adapter le trajet des objets pour que l'application du poudrage correspondant à la sous-couche ait lieu le plus tôt possible après l'opération de séchage à chaud, pour que la mise en oeuvre de l'invention puisse se faire sans adjonction de moyens de chauffage spécifiques, mais qu'au contraire, en supprimant (si on se réfère à l'enseignement du brevet américain cité ci-dessus) un poste de chauffage entre les deux cabines de poudrage.

L'invention concerne aussi une installation de poudrage d'objets, notamment à partir de peinture en poudre thermodurcissable, du type comportant des moyens de transport desdits objets agencés pour leur faire traverser successivement un premier poste de poudrage où lesdits objets reçoivent une sous-couche de poudre, un second poste de poudrage où lesdits objets reçoivent une couche de poudre d'une couleur choisie et un poste de chauffage où ladite couche de couleur choisie est durcie, ledit second poste de poudrage comportant des moyens de récupération de poudre non déposée sur lesdits objets, reliés à des moyens de projection dudit premier poste de poudrage, caractérisée en ce que, en amont dudit premier poste de poudrage, lesdits moyens de transport sont agencés pour que lesdits objets traversent un poste de traitement comportant au moins des moyens pour élever la température desdits objets.

L'invention sera mieux comprise et d'autres avantages de celle-ci apparaîtront plus clairement à la lumière de la description qui va suivre, donnée uniquement à titre d'exemple, et faite en référence aux dessins annexés dans lesquels:
  – la figure 1 représente un schéma de principe d'une installation conforme à l'invention; et
  – la figure 2 est une vue schématique d'un détail de réalisation du second poste de poudrage où on dépose la couche finale de poudre d'une couleur choisie.

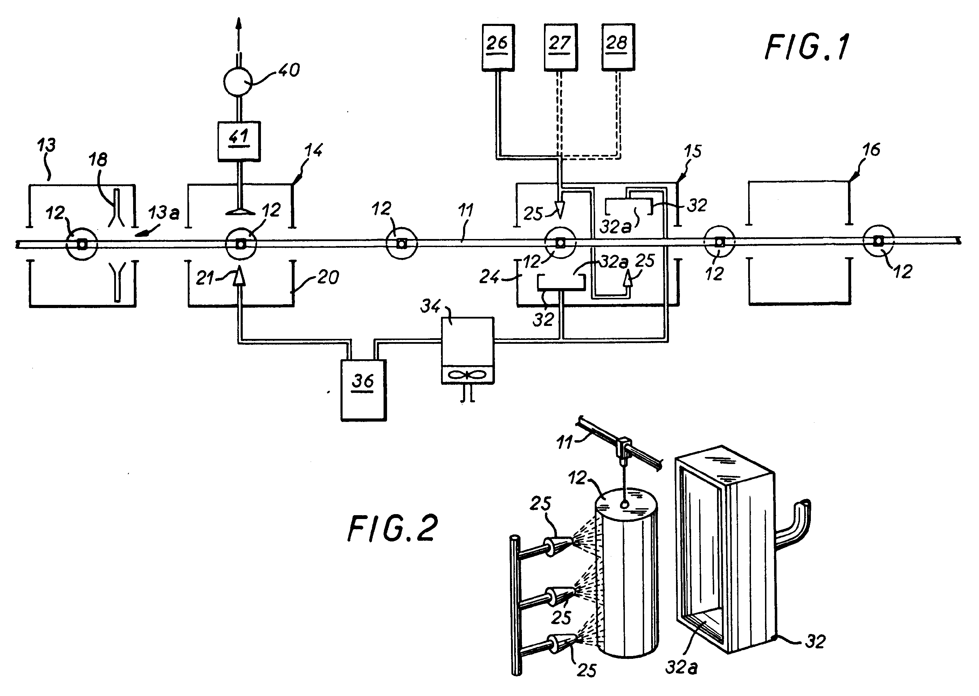

En se reportant aux dessins, un exemple d'installation de poudrage mettant en oeuvre l'invention comporte des moyens de transport 11, susceptibles de déplacer des objets 12 à recouvrir, le long d'un certain trajet traversant différentes zones d'activité définies par des équipements tels que, dans l'ordre de cheminement desdits objets: un poste de traitement 13, un premier poste de poudrage 14, un second poste de poudrage 15 et un poste de chauffage 16. Le poste de traitement 13 comporte des équipements traditionnels tels que des moyens de dégraissage et éventuellement des moyens de phosphatage, qui ne sont pas représentés car ils ne font pas partie de l'invention. En revanche, ce poste est équipé, au voisinage de sa sortie 13a de moyens de séchage à chaud 18, comme par exemple des moyens de soufflage d'air chaud et/ou de chauffage par infrarouge. Ces moyens de séchage sont classiques mais revêtent une importance particulière dans la mise en oeuvre de l'invention, comme mentionné ci-dessus. Le premier poste de poudrage 14 comporte une cabine 20 renfermant au moins un et de préférence plusieurs projecteurs de poudre 21. Le second poste de poudrage comporte une cabine 24 renfermant au moins un et de préférence plusieurs projecteurs de poudre 25. Ceux-ci sont reliés sélectivement à l'un des réservoirs de poudre 26, 27, 28 ... Ainsi, à son passage dans la cabine 24, chaque objet reçoit une couche de poudre d'une couleur spécifique choisie et cette couche est ensuite transformée en un revêtement homogène et résistant, lorsque l'objet traverse le poste de chauffage 16. La cabine 24 renferme aussi des moyens de récupération de la poudre non déposée sur les objets 12. Dans l'exemple, il s'agit de caissons d'aspiration 32 (voir figure 2) présentant chacun une face d'aspiration 32a ouverte en regard d'un projecteur 25 ou d'un groupe de tels projecteurs. Ce ou ces projecteurs 25 et le caisson d'aspiration 32 correspondant sont situés de part et d'autre du trajet des objets, imposé par les moyens de transport 11. Ces caissons sont tous reliés à un récupérateur de poudre 34 qui comporte des moyens de ventilation agencés pour aspirer en permanence le mélange air-poudre de la cabine 24. Ce récupérateur comporte en outre des moyens de séparation, tels que des filtres, où s'effectue la séparation entre l'air de ventilation et la poudre. L'air propre est rejeté à l'extérieur tandis que la poudre est recueillie dans un réservoir 36. En fait, tous les projecteurs de poudre 25 du second poste de poudrage 15 sont associés, individuellement ou par groupe(s) à un ou plusieurs caissons d'aspiration 32. De cette façon, pratiquement toute la poudre qui ne se dépose pas sur les objets 12 est récupérée et transite par le réservoir 36. Il n'est donc pas nécessaire de nettoyer la cabine 24 lors d'un changement de couleur. Bien entendu, la poudre qui passe par le réservoir 36 prend progressivement une couleur quelconque variant au cours du temps, en fonction des séquences d'application de poudres de couleurs différentes, qui se succèdent dans la cabine 24. Des moyens de prélèvement sont intercalés entre le réservoir 36 et le ou les projecteurs 21 que renferme la cabine 20. Les objets 12 reçoivent donc, dans cette cabine, une sous-couche de relativement faible épaisseur, d'une couleur non définie.

Selon l'invention, les moyens de transport 11 sont agencés pour que les objets 12 traversent le poste de traitement 13, en amont dudit premier poste de poudrage 14, ce poste de traitement comportant, comme on l'a vu, des moyens pour élever la température desdits objets. Dans l'exemple décrit, ces moyens pour élever la température des objets, sont simplement constitués par les moyens de séchage à chaud 18 dudit poste de traitement 13. Ce dernier est donc de préférence placé très près de la cabine 20 de façon que les objets qui pénètrent dans cette cabine soient portés à une température supérieure à la température ambiante, comprise dans les limites indiquées ci-dessus. Le bon rendement du dépôt dans la cabine 20 dû au préchauffage des objets, rend en principe tout système de recyclage inutile, de sorte que la cabine 20 est simplement maintenue en légère dépression par un extracteur d'air 40, aspirant en permanence l'air de la cabine à travers un filtre 41 qui retient la très faible quantité de poudre entraînée par l'air extrait.

Les conditions optimales de fonctionnement de l'installation qui vient d'être décrite sont atteintes lorsque le rendement de dépôt au second poste de poudrage 15 se situe entre 70 et 75%. De cette façon, les 25 à 30% de poudre récupérée suffisent à alimenter le premier poste de poudrage. Un rendement de 70 à 75% dans la cabine 24 peut être obtenu en utilisant une pluralité de projecteurs 25 à faible débit, par exemple de l'ordre de 5 kg/h, chacun.

## Revendications

1. Procédé de revêtement d'objets par poudrage, du type consistant à faire circuler lesdits objets (12) successivement dans une première zone (20) où ils reçoivent, par projection, une sous-couche de poudre puis, après un début de durcissement de ladite sous-couche, dans une seconde zone (24) où chaque objet reçoit, par projection, une couche de poudre d'une couleur choisie susceptible d'être changée d'un objet à l'autre, de la poudre non déposée sur lesdits objets étant récupérée (32, 34) dans ladite seconde zone pour alimenter des moyens de projection (21) situés dans ladite première zone, caractérisé en ce qu'il consiste à élever la température (18) desdits objets avant leur introduction dans ladite première zone.

2. Procédé selon la revendication 1, caractérisé en ce qu'on porte lesdits objets (12) à une température supérieure à 50°C, de préférence comprise entre 70 et 120°C.

3. Procédé selon la revendication 1 ou 2, caractérisé en ce qu'il consiste à introduire lesdits objets (12) dans ladite première zone (20) à leur sortie d'un poste de pré-traitement où ils sont portés à une température supérieure à la température ambiante, par exemple en raison d'une phase de séchage à chaud (18).

4. Installation de poudrage d'objets, notamment à partir de peinture en poudre thermodurcissable, du type comportant des moyens de transport (11) desdits objets agencés pour leur faire traverser successivement un premier poste de poudrage (14) où lesdits objets reçoivent une sous-couche de poudre, un second poste (15) de poudrage où lesdits objets reçoivent une couche de poudre d'une couleur choisie et un poste de chauffage (16) où ladite couche de couleur choisie est durcie, ledit second poste de poudrage comportant des moyens de récupération (32, 34) de poudre non déposée sur lesdits objets, reliés à des moyens de projection (21) dudit premier poste de poudrage, caractérisée en ce que, en amont dudit premier poste de poudrage, lesdits moyens de transport (11) sont agencés pour que lesdits objets (12) traversent un poste de traitement comportant au moins des moyens (18) pour élever la température desdits objets.

5. Installation de poudrage selon la revendication 4, caractérisée en ce que lesdits moyens de traitement comportent des moyens de séchage à chaud (18), par exemple, à air chaud et/ou à rayonnement infrarouge.

6. Installation de poudrage selon la revendication 5, caractérisée en ce que lesdits moyens de traitement (13) comprennent des moyens de dégraissage et/ou de phosphatation classiques, auxquels sont associés lesdits moyens de séchage à chaud (18).

7. Installation de poudrage selon l'une des revendications 4 à 6, caractérisée en ce que les moyens de récupération précités comprennent au moins un caisson d'aspiration (32) comportant une face d'aspiration (32a), ledit caisson étant disposé de telle façon que ladite face d'aspiration (32a) soit en regard d'au moins un projecteur de poudre (25), ledit projecteur et ledit caisson d'aspiration étant situés de part et d'autre du trajet desdits objets, imposé par lesdits moyens de transport (11).

8. Installation de poudrage selon la revendication 7, caractérisée en ce que tous les projecteurs de poudre (25) dudit second poste de poudrage sont associés, individuellement ou par groupe(s) à un ou plusieurs caissons d'aspiration (32) précités.

## Patentansprüche

1. Verfahren zum Pulverbeschichten von Gegenständen, bei dem die zu beschichtenden Gegenstände (12) nacheinander in einem ersten Abschnitt (20) unter Pulverbestrahlung zur Bildung einer Pulverunterschicht und sodann nach beginnender Verfestigung derselben in einem zweiten Abschnitt (24) unter Pulverbestrahlung zur Bildung einer weiteren Pulverschicht mit einer von Gegenstand zu Gegenstand wechselnd wählbaren Farbe zum Durchlauf gebracht werden, wobei das auf den Gegenständen nicht abgesetzte Pulver in dem zweiten Abschnitt (24) wiedergewonnen (32, 34) und der Bespeisung der Pulverbestrahlung (21) des ersten Abschnitts (20) zugeführt wird, dadurch gekennzeichnet, daß die zu beschichtenden Gegenstände (12) vor ihrem Eintritt in den ersten Pulverbestrahlungsabschnitt (20) zur Erhöhung ihrer Temperatur einer Beheizung (18) unterworfen werden.

2. Verfahren nach Anspruch 1, dadurch gekennzeichnet, daß die Gegenstände (12) vor ihrer ersten Beschichtung auf eine Temperatur von mehr als 50° C, vorzugsweise zwischen 70 und 120° C gebracht werden.

3. Verfahren nach Anspruch 1 oder 2, dadurch gekennzeichnet, daß die zu beschichtenden Gegenstände (12) bei ihrem Austritt (13a) aus einer Vorbehandlungsstelle (13) in den ersten Pulverbestrahlungsabschnitt (20) auf einer über der Umgebungstemperatur liegenden Temperatur, z.B. mittels einer Heiztrocknungsphase (18) gehalten werden.

4. Vorrichtung zur Durchführung des Verfahrens nach Ansprüchen 1 bis 3, insbesondere zum Aufbringen von Farben aus thermohärtbarem oder duroplastischem Pulver, mit Transportmitteln (11) zum aufeinanderfolgenden Durchlauf der zu beschichtenden Gegenstände (12) durch eine zur Bildung einer Pulverunterschicht vorgesehenen ersten Bepulverungsstation (14), eine der Bildung einer weiteren Pulverschicht mit einer gewählten Farbe dienenden zweiten Bepulverungsstation (15) und eine die Pulverschicht gewählter Farbe härtende Heizstation (16), wobei die zweite Bepulverungsstation (15) zur Verwertung von auf den Gegenständen nicht abgesetztem Pulver eine Wiedergewinnungsanlage (32, 34) besitzt, die an in der ersten Bepulverungsstation (14) befindliche Pulverbestrahlungsorgange (21) angeschlossen ist, dadurch gekennzeichnet, daß in Durchlaufrichtung vor der ersten Bepulverungsstation (14) eine die Transportmittel (11) mit den von ihnen zugeführten Gegenständen (12) aufnehmende Vorbehandlungsstelle (13) mit einer die Gegenstände auf höhere Temperatur bringenden Einrichtung (18) vorgesehen ist.

5. Vorrichtung nach Anspruch 4, dadurch gekennzeichnet, daß die Temperatursteigerungseinrichtung (18) ein Heiztrockner ist, der beispielsweise mit Heißluft und/oder Infrarotstrahlung arbeitet.

6. Vorrichtung nach Anspruch 5, dadurch gekennzeichnet, daß die Vorbehandlungsstelle (13) übliche Mittel zum Entfetten und/oder zur Phosphatierung umfaßt, denen der Heiztrockner (18) zugeordnet ist.

7. Vorrichtung nach einem der Ansprüche 4 bis 6, dadurch gekennzeichnet, daß die Wiedergewinnungsanlage (32, 34) mindestens einen Saugkasten (32) mit einer wenigstens einem Pulverstrahler (25) zugewandten Ansaugfläche (32a) aufweist, wobei Pulverstrahler (25) und Saugkasten (32) beiderseits der von den Transportmitteln (11) geführten Gegenständen (12) gelegen sind.

8. Vorrichtung nach Anspruch 7, dadurch gekennzeichnet, daß sämtliche Pulverstrahler (25) der zweiten Bepulverungsstation (15) einzeln oder gruppenweise einem oder mehreren Saugkästen (32) zugeordnet sind.

**Claims**

1. A process for coating objects by powder coating, of the type comprising passing said objects (12) successively through a first zone (20) in which they receive an undercoat of powder by spraying and then, after initial hardening of said undercoat, through a second zone (24) in which each object receives by spraying a layer of powder of a selected colour which may be changed from one object to another, powder which is not deposited on said objects being recovered (32, 34) in said second zone to feed spray means (21) disposed in said first zone, characterised in that it comprises raising the temperature (18) of said objects before they are introduced into said first zone.

2. A process according to claim 1 characterised in that said objects (12) are raised to a temperature of higher than 50°C and preferably between 70 and 120°C.

3. A process according to claim 1 or claim 2 characterised in that it comprises introducing said objects (12) into said first zone (20) when they issue from a pre-treatment station in which they are raised to a temperature higher than ambient temperature, for example by virtue of a hot drying phase (18).

4. An installation for powder coating objects, in particular using paint of thermosetting powder, of the type comprising means (11) for transporting said objects, which are arranged to pass the successively through a first powder coating station (14) in which said objects receive an undercoat of powder, a second powder coating station (15) in which said objects receive a layer of powder of a selected colour and a heating station (16) in which said layer of selected colour is hardened, said powder coating station comprising means (32, 34) for recovery of powder which is not deposited on said objects, said means being connected to spray means (21) of said first powder coating station, characterised in that upstream of said first powder coating station said transport means (11) are so arranged that said objects (12) pass through a treatment station comprising at least means (18) for raising the temperature of said objects.

5. A powder coating installation according to claim 4 characterised in that said treatment means comprise hot drying means (18), for example using hot air and/or infra-red radiation.

6. A powder coating installation according to claim 5 characterised in that said treatment means (13) comprise conventional degreasing and/or phosphation means with which said hot drying means (18) are associated.

7. A powder coating installation according to one of claims 4 to 6 characterised in that said recovery means comprise at least one suction box (32) having a suction face (32a), said box being so disposed that said suction face (32a) faces towards at least one powder sprayer (25), said sprayer and said suction box being disposed on respective sides of the path of movement of said objects as imparted by said transport means (11).

8. A powder coating installation according to claim 7 characterised in that all the powder sprayers (25) of said second powder coating station are associated individually or in one or more groups with one or more said suction boxes (32).

FIG.1

FIG.2